# EUROPEAN PATENT SPECIFICATION

(11) **EP 2 404 749 B1**
(45) Date of publication and mention of the grant of the patent: **04.11.2020**
(21) Application number: 11152060.7
(22) Date of filing: 25.01.2011
(51) Int. Cl.: B32B 5/18, B32B 5/26, B32B 11/10, B32B 15/08, E04C 2/08, E04C 2/16, E04C 2/20, E04C 2/24

(54) **Panel structure that is impermeable to gases, particularly for the insulation of buildings**
Plattenstruktur, die gasundurchlässig ist, insbesondere zur Isolierung von Gebäuden
Structure de panneau imperméable aux gaz, en particulier pour l'isolation des bâtiments

(30) Priority: 08.07.2010 IT TV20100035 U
(43) Date of publication of application: 11.01.2012
(73) Proprietor: Silcart S.p.A., 31030 Carbonera, Frazione Mignagola TV (IT)
(72) Inventor: Faotto, Ugo, 31100 Treviso (IT)
(74) Representative: Modiano, Micaela Nadia

(56) References cited:
- DE-A1- 2 451 143
- DE-U1-202005 015 125
- US-A- 4 948 655
- US-A- 5 220 760
- US-A1- 2005 124 241
- US-A1- 2009 280 320

## Description

The present application refers to a panel structure that is impermeable to gases, particularly for the insulation of buildings.

Nowadays the cost of domestic heating or cooling has become an important part of the family economy and of the running costs of a company; this factor, combined with protection of the environment and the need to save energy, has led to an improvement in heating systems, not only in terms of the production of heat, but especially in terms of the thermal insulation of an air-conditioned environment.

The study and research of insulating materials has also led to an improvement in materials in favour of products with cellular structures, which generally are expanded synthetic products (polystyrene, styrene, polyurethane).

Insulating materials with cellular structures have a reduced average thermal conductivity λ [W m⁻¹ K⁻¹] owing to their very structure, of which only 3-5% by volume are formed of polymer and of which 97-95% by volume are a gaseous phase of expanding agents that is enclosed by the cells.

The small quantity of polymer and the gaseous phase limit the thermal conduction, while the small size of the closed cells limits the thermal convection between the gas and the internal surface of such cells.

The phenomenon that most penalises the performance of these cellular structures is the partial diffusion of the gaseous phase towards the panel outside.

Expanded polyurethane is often used nowadays because, with an average thermal conductivity coefficient λ that is lower than that of other commercial insulators (and therefore makes it a better insulator), it makes it possible to achieve good thermal insulation using thinner panels.

Insulating panels for construction are known which comprise a cellular structure covered on both sides by a thin metal layer, generally aluminium, or coverings that are impermeable to gases and adapted to prevent the diffusion of the gaseous phase towards the outside of the panel.

The types of insulating panel containing PUR (polyurethane) or PIR (polyisocyanurates) with gas-tight covering (i.e. impermeable to gas) are made using different types of surfaces, for example by means of sheets of aluminium foil which are bonded, by means of thin layers of glue, to sheets of fibreglass.

This type of panel has the drawback of the possible creation of micro-holes in the thin covering film of aluminium, caused by direct contact between such aluminium film and the fibreglass (which are normally sharp).

This fact compromises the insulating properties of the panel owing to diffusion of the gaseous phase towards the outside of the panel.

Other types of insulating panel containing PUR (polyurethane) or PIR (polyisocyanurates) with gas-tight covering (i.e. impermeable to gas) are manufactured with the surfaces being covered by lacquered plain aluminium foil, aluminium foil bonded with plastic film, aluminium foil bonded with paper, or multilayer with aluminium film.

A drawback of the solutions just described consists in low dimensional stability of the insulating panel, both during its production and over time, caused principally by the absence of fibreglass inside the structure which would give it dimensional rigidity.

The main drawback of all of the known solutions mentioned above consists in the fact that the gas-impermeable covering is easily perforated during installation, thus allowing the diffusion of the gases outside the panel and the impairment of its insulating capacities.

A further drawback of the cited insulating panels is that they cannot be walked on and their low resistance to abrasion.

A further drawback of insulating panels of the known type consists in the incompatibility with the application of adhesives, resins, mortars etc. on the external surface, owing to the fact that the outside surface is too smooth or not adapted to the cited adhesives.

Another drawback of the solutions described above consists in that the outside covering does not protect the fire-resistance properties of the panel; a problem which is aggravated by the fact that these insulating panels are often placed below membranes that require affixing with hot scarfing and therefore they are subjected to a thermal shock.

Another drawback consists in the fact that the coating of the aforementioned known panels does not guarantee resistance to water and thus it does not prevent the formation of algae or mould, thus exposing the panel to contamination.

Another drawback which is found in the known art consists in that panels which can be positioned on a roof and which are gas-tight cannot be hot scarfed, since they are made with surfaces like lacquered plain aluminium foil, aluminium foil bonded with plastic film, aluminium foil bonded with paper, or multilayer with aluminium film, which are all surfaces that cannot be hot scarfed, because they have a base that does not allow hot scarfing. The hot-scarfable surfaces which are currently used in making panels for roofs are bituminous "open face" surfaces which are adapted to receive hot scarfing, but do not have any gas-tightness characteristics.

In practice, when a hot-scarfable product is applied, and currently such a product is of the "open face" type, it is necessary to employ thicker panels in order to limit the diffusion of the gaseous phase towards the outside of the panel and ensure low values of λ and therefore good thermal insulation.

The gas-tight products which are currently used cannot be hot scarfed.

US 4 948 655 A discloses a composite panel comprising a heat-insultating material layer of foamed plastic to which there is secured a waterproof bitumen compound layer. The bitumen compound is coated to the heat-insultating layer in a liquid state at a temperature ranging from 150° C. to 190° C. A waterproofing membrane is provided, covering the bitumen compound, for providing a final mantel of layer of a roofing.

DE 20 2005 015125 U1 discloses a bitumen sealing strip for protection of building interiors against entry of moisture, including an internal aluminum layer which finishes at a distance from the strip edge for providing durable homogeneous joints to be formed between adjacent strips.

DE 24 51 143 A1 discloses a method for lining of wet areas with a layer of rigid plastic foam having laminated thereto a vapor barrier in the form of an aluminum foil.

US 2009/280320 A1 discloses a built-up roofing surfacing sheet comprising, arranged one on top of the other, a bottom layer of sand, a fibreglass mat layer, an asphalt coating layer, a paper reinforcing layer, a smooth aluminum foil layer, and a white resin coating layer.

US 2005/0124241 A1 discloses a bituminous water vapor barrier for use under concrete slabs in contact with soil or granular fill. The vapor barrier is a multi-ply weather coated permanently bonded semi-flexible bituminous core board composed of the homogeneous high melt point bituminous material in combination with an exclusive core suspended midpoint in the board. This core is sealed under heat and pressure between liners of asphalt and impregnated felt and a glass mat liner. An asphalt weather coat is applied to the glass mat liner and covered with a polyethylene anti-stick sheet.

US 5 220 760 A discloses an exterior structural foam sheathing panel comprising a central insulating core of closed-cell plastic foam, on each face of which there is adhered, by means of an adhesive, a vapor-impervious sheet of metallic foil, to each of which in turn there is laminated by means of an adhesive a fibrous cover sheet. To the exposed planar surface of one or both fibrous sheets there is applied a weather protection material such as polyethylene film, urethane resin, paint, water sealant coatings, or aluminum foil.

The aim of the present invention is to solve the above-mentioned technical problems, eliminating the drawbacks in the cited known art, by devising a panel structure that has good insulating properties and maintains the properties of impermeability to the expanded gases over time and that can be hot-scarfed at the same time.

Within this aim, an object of the present invention is to devise a panel structure that has an optimum resistance to being walked on and to abrasion, in particular during laying and affixing operations.

Another object of the invention is to prevent the punching of micro-holes in a gas-impermeable aluminium film, if present, as a result of direct contact with the fibreglass.

A further object of the invention is to allow the application, on the surfaces of the panel, of adhesives, top coat plasters or mortars, for affixing the panel to other supports.

Another object of the invention is to protect and/or improve the fire-resistance properties of the panel.

Another object of the invention is to guarantee the resistance to water and to protect the panel from contamination by mould and/or bacteria.

In accordance with the invention, there is provided a panel structure as defined in the appended claims.

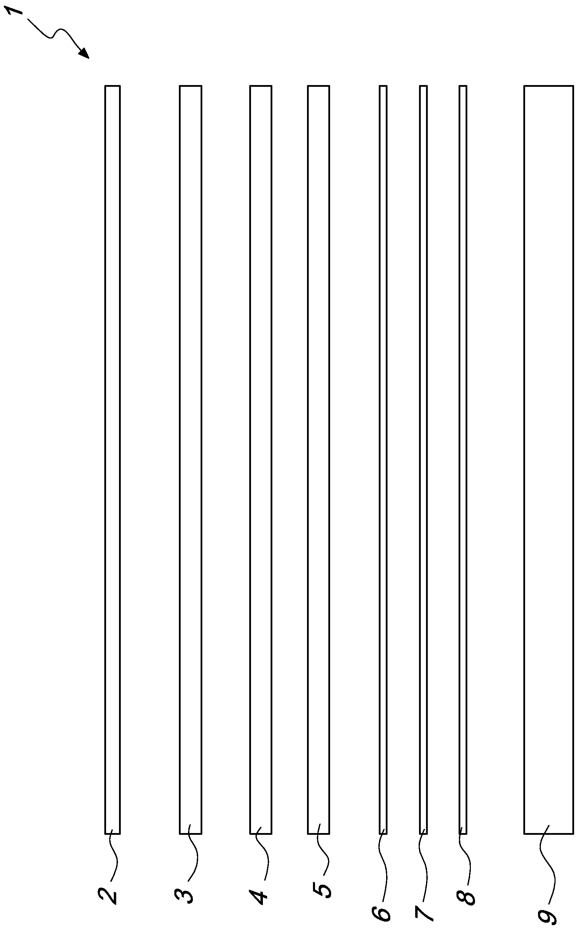

Further characteristics and advantages of the invention will become better apparent from the following detailed description of a particular embodiment, illustrated by way of non-limiting example in the accompanying drawings, wherein the sole Figure shows, in a schematic view, a panel structure according to the invention.

With reference to the figure, the reference numeral 1 indicates a panel structure that is impermeable to gases, particularly for the insulation of buildings, whose various components are shown separated from one another in the figure for a better graphical representation.

The panel structure 1 is composed of a hot-scarfable layer that is composed of a first layer 2 composed of polypropylene non-woven fabric or of polyethylene film or PP film (optionally treated with silicone) or of talc or of sand (on the hot-scarfable side).

Then there is a second layer 3 that is composed of a first elastoplastomeric bituminous mixture with properties that include adhesion so as to saturate a subsequent third layer 4 which is constituted by glass fibre, or glass cloth, or fibreglass nets, or nets or fabrics made of composite materials so as to define a framework with a grammage that is comprised between (40-100) g/m².

The structure optionally comprises a fourth layer 5 that is constituted by a second elastoplastomeric bituminous mixture with properties that include adhesion so as to saturate the overlying third layer 4 of glass fibre.

The structure comprises a fifth layer 6 that is constituted by LDPE or LLDPE or HDPE or PP or PA or EAA or EVA or EVOH or SURLYN or PET (10-40 µm), which is made by means of extrusion.

The structure comprises a sixth layer 7 that is constituted by aluminium (7-30 µm).

The structure comprises a seventh layer 8 that is constituted by PE or by PP or by PET (10-40 µm) and is made by means of extrusion or which is constituted by lacquering (for example epoxy, acrylic or nitro).

The structure lastly comprises an eighth layer 9 that is constituted by a panel made of PIR/PUR.

The production process specifies that the third layer 4 be saturated (i.e. covered on both sides) with the first and the second elastoplastomeric mixtures that constitute the second and fourth layers 3, 5.

On one side therefore the first bituminous mixture 3 is coupled with the first layer 2, whereas on the other side the second bituminous mixture 5 is coupled with the composite that is formed by the fifth, the sixth and seventh layers 6,7,8.

In this way, with the coupling to a panel of PIR/PUR 9, a panel structure is obtained that is impermeable to gases and at the same time can be hot-scarfed.

The invention is equally effective even if it is implemented without the fourth layer 5 i.e. the second bituminous mixture.

It has been found that the invention fully achieves the specified aim and objects, a panel structure having been obtained that is impermeable to expanded gases over time and that at the same time can be hot-scarfed.

Moreover, bituminous mixture and PP or sand or talc on the hot-scarfable side protect the aluminium which could be damaged if walked upon.

Obviously the materials used as well as the dimensions constituting the individual components of the invention can be more pertinent according to specific requirements.

The various means for effecting certain different functions shall not in any way coexist only in the illustrated embodiment, but may be present in many embodiments per se, even if they are not illustrated.

The characteristics indicated as advantageous, convenient or similar may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A panel structure that is impermeable to gases, particularly for the insulation of buildings, the panel structure comprising a hot scarfable first layer that is composed of polypropylene non-woven fabric or polyethylene film or PP film (optionally treated with silicone) or talc or sand and by a second layer that is composed of a first elastoplastomeric bituminous mixture with adhesive properties so as to saturate a third layer that is constituted by glass fibre, or glass cloth, or fibreglass nets, or nets or fabrics made of composite materials and that has a grammage that is comprised between (40-100)g/m², said structure comprising a layer that is constituted by LDPE or LLDPE or HDPE or PP or PA or EAA or EVA or EVOH or SURLYN or PET (10-40 µm), made by means of extrusion, and a layer that is constituted by aluminium (7-30 µm), and a layer that is constituted by PE or PP or PET (10-40 µm) and is made by means of extrusion or which is constituted by lacquering, and a layer that is constituted by a cellular PIR/PUR panel.

2. The structure according to claim 1, **characterized in that** it comprises a fourth layer that is constituted by a second elastoplastomeric bituminous mixture with adhesive properties so as to saturate said overlying third layer of glass fibre.

3. The structure according to claim 1, **characterized in that** it has a total grammage that is (600-800) g/m².

4. The structure according to claim 2, **characterized in that** said layer that is constituted by LDPE or LLDPE or HDPE or PP or PA or EAA or EVA or EVOH or SURLYN or PET (10-40 µm) is adapted to promote the anchoring of said second bituminous mixture and optimize its adhesion.

5. The structure according to claim 1, **characterized in that** said layer that is constituted by PE or PP or PET (10-40µm) is adapted to promote the grip of a polyurethane foam which constitutes said PIR/PUR panel.

## Patentansprüche

1. Eine Plattenstruktur, die gasundurchlässig ist, insbesondere zur Isolierung von Gebäuden, wobei die Plattenstruktur eine erste Schicht umfasst, die brenngeputzt werden kann und aus Polypropylen-Vliesstoff oder Polyethylenfilm oder PP-Film (wahlweise mit Silikon behandelt) oder Talk oder Sand besteht, und eine zweite Schicht, die aus einer ersten bituminösen Elastoplastomermischung mit adhäsiven Eigenschaften besteht, um eine dritte Schicht zu imprägnieren, die aus Glasfaser oder Glasfasergewebe oder Faserglasnetzen oder Netzen oder Geweben aus Verbundmaterialien besteht und ein Quadratmetergewicht zwischen (40-100) g/m² hat; wobei die Struktur eine Schicht umfasst, die aus LDPE, LLDPE, HDPE, PP, PA, EAA, EVA, EVOH, SURLYN oder PET (10-40 µm) besteht, hergestellt durch Extrusion, eine Schicht, die aus Aluminium (7-30 µm) besteht, und eine Schicht, die aus PE oder PP oder PET (10-40 µm) besteht und durch Extrusion oder Lackierung hergestellt wird, und eine Schicht, die aus einer porigen PIR/PUR-Platte besteht.

2. Die Struktur gemäß Anspruch 1, **dadurch gekennzeichnet, dass** sie eine vierte Schicht umfasst, die aus einer zweiten bituminösen Elastoplastomermischung mit adhäsiven Eigenschaften besteht, um die darüberliegende dritte Schicht aus Glasfaser zu imprägnieren.

3. Die Struktur gemäß Anspruch 1, **dadurch gekennzeichnet, dass** sie ein Gesamt-Quadratmetergewicht von (600-800) g/m² hat.

4. Die Struktur gemäß Anspruch 2, **dadurch gekennzeichnet, dass** die Schicht, die aus LDPE, LLDPE, HDPE, PP, PA, EAA, EVA, EVOH, SURLYN oder PET (10-40µm) besteht, ausgebildet ist, um die Verankerung der zweiten bituminösen Mischung zu fördern und ihre Adhäsion zu optimieren.

5. Die Struktur gemäß Anspruch 1, **dadurch gekennzeichnet, dass** die Schicht, die aus PE, PP oder PET (10-40 µm) besteht, ausgebildet ist, um die Haftung eines Polyurethanschaums zu fördern, aus dem die PIR/PUR-Platte besteht.

## Revendications

1. Structure de panneau imperméable aux gaz, en particulier pour l'isolation des bâtiments, la structure de panneau comprenant une première couche décriquable à chaud qui est composée d'un non-tissé à base de polypropylène ou d'un film de polyéthylène ou d'un film de PP (éventuellement traité à la silicone) ou de talc ou de sable et par une deuxième couche qui est composée d'un premier mélange bitumineux élastoplastomère ayant des propriétés adhésives afin de saturer une troisième couche qui est constituée de fibre de verre, ou de tissu de verre, ou de filets de fibre de verre, ou de filets ou tissus en matériaux composites et qui a un grammage qui est compris entre 40 et 100 g/m², ladite structure comprenant une couche qui est constituée de LDPE ou LLDPE ou HDPE ou PP ou PA ou EAA ou EVA ou EVOH ou Surlyn ou PET (10-40 µm), formée par extrusion, et une couche qui est constituée d'aluminium (7-30 µm), et une couche qui est constituée de PE ou PP ou PET (10-40 µm) et qui est formée par extrusion ou qui est constituée par laquage, et une couche qui est constituée par un panneau de PIR/PUR cellulaire.

2. Structure selon la revendication 1, **caractérisée en ce qu'**elle comprend une quatrième couche qui est constituée d'un deuxième mélange bitumineux élastoplastomère ayant des propriétés adhésives afin de saturer ladite troisième couche sus-jacente en fibre de verre

3. Structure selon la revendication 1, **caractérisée en ce qu'**elle a un grammage total de 600 à 800 g/m².

4. Structure selon la revendication 2, **caractérisée en ce que** ladite couche qui est constituée de LDPE ou LLDPE ou HDPE ou PP ou PA ou EAA ou EVA ou EVOH ou Surlyn ou PET (10-40 µm) est adaptée pour favoriser l'ancrage dudit deuxième mélange bitumineux et pour optimiser son adhérence.

5. Structure selon la revendication 1, **caractérisée en ce que** ladite couche qui est constituée de PE ou PP ou PET (10-40 µm) est adaptée pour favoriser l'adhérence d'une mousse de polyuréthane qui constitue ledit panneau de PIR/PUR.
